# EUROPEAN PATENT SPECIFICATION

(11) **EP 3 569 413 B1**
(45) Date of publication and mention of the grant of the patent: **05.08.2026**
(21) Application number: 18739378.0
(22) Date of filing: 10.01.2018
(51) Int. Cl.: B32B 27/30, B32B 27/20, B32B 27/08, B32B 27/32, B32B 27/36

(54) **MULTILAYER FILM, METHOD FOR PRODUCING SAME AND LAMINATE**
MEHRLAGIGER FILM, VERFAHREN ZU DESSEN HERSTELLUNG UND LAMINAT
FILM MULTICOUCHE, SON PROCÉDÉ DE PRODUCTION ET STRATIFIÉ

(30) Priority: 12.01.2017 JP 2017002980; 29.11.2017 JP 2017228559
(43) Date of publication of application: 20.11.2019
(73) Proprietor: Mitsubishi Chemical Corporation, Tokyo 100-8251 (JP)
(72) Inventor: NAKAYA, Fuminori, Tokyo 100-8251 (JP); KADOWAKI, Yuuji, Tokyo 100-8251 (JP)
(74) Representative: Ter Meer Steinmeister & Partner
(86) International application number: PCT/JP2018/000305
(87) International publication number: WO 2018/131594

(56) References cited:
- JP-A- 2009 045 862
- JP-A- 2010 013 597
- JP-A- 2013 245 297
- JP-A- 2014 182 283
- JP-A- 2014 208 733
- JP-A- 2016 118 698
- JP-A- 2016 186 054
- JP-A- H05 269 946
- US-A1- 2008 220 274
- US-B1- 6 652 985

## Description

### Technical Field

The present invention relates to a laminated film and a method for producing the laminated film, and a laminate.

### Background Art

Acrylic resin films are superior in transparency and weatherability and have high surface hardness, and hence preferably used as a film for surface protection to be bonded to various molded articles for interior or exterior use, such as optical parts in electric products, interior parts for automobiles, signboards, and building materials. Moreover, acrylic resin films subjected to surface treatment such as anti-reflective treatment and anti-fouling treatment can also impart surface functions including anti-reflective properties and anti-fouling properties etc. to a molded article through being bonded to the molded article.

Bonding of such an acrylic resin film for bonding to a substrate having poor adhesiveness to acrylic resins requires man-hours and labor for use of an adhesive, a primer, or the like, frequently leading to a disadvantage in terms of cost. In addition, acrylic resin films typically have tendencies of poor tensile resistance, poor tear resistance, and the like, and occasionally caused a problem with processability at room temperature.

For this reason, laminated films to which bondability, tear resistance, and so forth have been imparted have been developed, for example, through laminating a non-acrylic resin such as chlorinated polyolefin, as an adhesive layer (bonding layer) on an acrylic resin film.

Patent Literature 1 discloses an acrylic resin-based film superior in adhesion (bondability) or the like, the acrylic resin-based film including: an acrylic resin film; and a layer of a chlorinated polypropylene resin laminated on at least one surface of the acrylic resin film, wherein the chlorinated polypropylene resin has been modified with maleic anhydride and has a chlorine content of 20 to 30% by mass. In addition, Patent Literature 2 discloses a laminated film including: a layer containing a mixed resin of a polylactic acid-based resin and an acrylic-based resin; and a layer containing a polyolefin-based resin. Further, Patent Literature 3 discloses a film including: a tacky layer containing an acrylic-based block copolymer; and a polyolefin-based resin composition layer.

### Prior Art Literature

### Patent Literature

Patent Literature 1: JP2010-137415A
Patent Literature 2: JP2007-090877A
Patent Literature 3: JP2014-125511A
US 6,652,985 B1 relates to an acrylic resin laminated film comprising a first layer comprising an acrylic resin and a second layer comprising a resin composition comprising (a) an acrylic resin and an olefin-based copolymer obtained by copolymerization of an olefin and at least one monomer selected from the group consisting of unsaturated carboxylic acids, unsaturated carboxylates, unsaturated carboxylic anhydrides and vinyl acetate, or (b) an olefin-based copolymer obtained by copolymerization of an olefin and a monomer having glycidyl group in a side chain.
US 2008 220 274 A1 relates to a composite consisting of an impact-modified acrylic capstock or film on a thermoplastic olefin (TPO).
JP 2016 118 698 A relates to a multilayer film having a B layer formed of a resin (B) containing a polymer having an alicyclic structure, a B' layer formed of a resin (B') containing a polymer having an alicyclic structure, and an A layer formed of a thermoplastic resin (A) different from the resin (B) and the resin (B'), in order of the B layer, the A layer, and the B'layer.

### Summary of The Invention

### Problems to be solved by the Invention

If a halogenated polyolefin resin including a large amount of halogen elements such as chlorine was used for an adhesive layer, however, harmful substance such as dioxin might be generated in disposal by incineration, occasionally causing a problem in terms of environmental loads. In addition, if polylactic acid or the like was mixed with an acrylic resin, peeling from the adhesive layer was prevented, but the transparency and weatherability inherent in the acrylic resin might be lost. In addition, approaches of using a plurality of acrylic-based polymer blocks for an acrylic resin might cause a problem in terms of production cost for each of the polymer blocks.

In view of such circumstances, an object of the present invention is to provide: a laminated film which is superior in appearance, durability such as tensile resistance and tear resistance, bondability, and handling properties and allows reduction of environmental loads in disposal by incineration; and a method for producing the laminated film.

Another object of the present invention is to provide a protective film, overlay film, and laminate, which use the laminated film.

### Solutions to the Problems

The present inventors diligently studied to find that the objects can be achieved by at least combining two resin layers each having a specific composition, thereby completing the present invention. Specifically, the present invention provides a laminated film as defined in appended claim 1, a method as specified in appended claim 11 for producing the laminated film and a laminate as specified in appended claim 12 comprising the laminated film. The present invention further provides a protective film according to appended claim 13 and an overlay according to appended claim 14, both comprising the laminated film.

### Effects of The Invention

The present invention can provide a laminated film which is superior in appearance, durability such as tensile resistance and tear resistance, bondability, and handling properties and allows reduction of environmental loads in disposal by incineration. In addition, the present invention can provide a protective film, overlay film, and laminate, which use the laminated film. Mode to Carry Out the Invention

### <Laminated film>

The laminated film of the present invention at least includes: an acrylic resin layer (I) formed of an acrylic resin composition (A); and a polyolefin resin layer (II) formed of a polyolefin resin composition (B).

Here, the acrylic resin composition (A) includes a rubber particle. In addition, the polyolefin resin composition (B) has a halogen element content of less than 10% by mass.

The acrylic resin layer (I), which is composed of a specific acrylic resin composition (A) as described above, is superior in weatherability and surface appearance. For this reason, it is preferable when the laminated film of the present invention is used for bonding that the polyolefin resin layer (II) face an object to be bonded to serve as a bonding layer and the acrylic resin layer (I), which is superior in surface appearance and so forth, face the opposite side to the object to be bonded to serve as a surface layer.

The laminated film of the present invention may include another layer in addition to these resin layers, and, for example, may include an additional resin layer (III) on the surface of the polyolefin resin layer (II) opposite to the surface where the acrylic resin layer (I) is disposed.

Now, each of the layers constituting the laminated film of the present invention will be described in detail.

### (Acrylic resin layer (I))

The acrylic resin layer (I) is composed of an acrylic resin composition (A) including a rubber particle (rubber-including acrylic resin composition), and can be a solidified product of the acrylic resin composition (A).

### [Acrylic resin composition (A)]

The acrylic resin composition (A) includes a rubber particle (A1) from the viewpoint of the toughness and handling properties of the laminated film. In the acrylic resin composition (A), which includes an acrylic resin component, this acrylic resin component may be derived from the rubber particle described above (e.g., an acrylic rubber particle) (A1), or from another material (e.g., a thermoplastic polymer (A2) described later). If another rubber particle including no acrylic resin component (e.g., a silicone rubber particle) is used as the rubber particle (A1), for example, it follows that the acrylic resin composition (A) additionally includes another material including an acrylic resin component. If an acrylic rubber particle, which includes an acrylic resin component, is used as the rubber particle (A1), on the other hand, a material including no acrylic resin component may be used as another material to be included in the acrylic resin composition (A), or not.

The acrylic resin composition (A) can contain, for example, the rubber particle (A1), a thermoplastic polymer (A2), and an additive (C 1), and can be constituted of them. In particular, the acrylic resin composition (A) contains 5.5 to 100% by mass of (A1) and 0 to 94.5% by mass of (A2) based on 100% by mass of (A1) and (A2) in total, and preferably further contains 0 to 20 parts by mass (in total) of the additive (C1) based on 100 parts by mass of (A1) and (A2) in total.

If the content of the rubber particle (A1) is 5.5% by mass or more, higher toughness is imparted to the acrylic resin layer (I), resulting in less frequent formation of a broken film in production of the laminated film and thus better productivity. In addition, the laminated film exhibits better handling properties in being used.

Further, if the content of the additive (C1) is 20 parts by mass or less, the laminated film has better thermal resistance and better anti-fouling properties.

Moreover, the acrylic resin composition (A) more preferably contains 10 to 100% by mass of (A1) and 0 to 90% by mass of (A2), and even more preferably 15 to 100% by mass of (A1) and 0 to 85% by mass of (A2), based on 100% by mass of (A1) and (A2) in total. The acrylic resin composition (A) more preferably contains 0.1 to 10 parts by mass of the additive (C1), and even more preferably 1.0 to 8 parts by mass of the additive (C1), based on 100 parts by mass of (A1) and (A2) in total. The acrylic resin composition (A) may be free of the thermoplastic polymer (A2) and the additive (C1), and can be constituted only of the rubber particle (A1).

The elastic modulus of the acrylic resin composition (A) is preferably 20 to 5000 MPa, more preferably 100 to 3000 MPa, and even more preferably 300 to 1500 MPa. If the elastic modulus of the acrylic resin composition (A) is 20 MPa or more, blocking of films is readily prevented, and appropriate rigidity is imparted to the film to provide better handling properties. If the elastic modulus of the acrylic resin composition (A) is 5000 MPa or less, appropriate flexibility is imparted to the film to provide better handling properties. The elastic modulus can be measured in a manner described later.

The elongation at break of the acrylic resin composition (A) is 20% or more, preferably 80% or more, and particularly preferably 120% or more. If the elongation at break of the acrylic resin composition (A) is 5% or more, the laminated film of the present invention exhibits better elongation at break in a tensile test, and better elongation at maximum in a tear test and better peel resistance, and thus better handling properties.

The measurement method for the elongation at break will be described later.

Now, each of the materials contained in the acrylic resin composition (A) will be described in detail.

### - Rubber particle (A1)

The rubber particle (A1) is not particularly limited if it is a particle containing a rubber (or resin) component, and any known rubber particle can be appropriately used.

Examples of the rubber particle (A1) include an acrylic rubber particle, which contains acrylic resin, a silicone rubber particle, which contains silicone resin, and a butadiene rubber particle, which contains butadiene resin. However, an acrylic rubber particle is preferably used as the rubber particle (A1) for transparency and weatherability.

The acrylic rubber particle can contain, in addition to an acrylic resin component (e.g., (meth)acrylic acid alkyl ester), another component (e.g., styrene, acrylonitrile). (Meth)acrylic acid refers to either one or both of acrylic acid and methacrylic acid. Likewise, the silicone rubber particle and butadiene rubber particle can contain another component in addition to a silicone resin component and a butadiene resin component, respectively.

Further, it is preferable for transparency, toughness, thermal resistance, and handling properties that the rubber particle (A1) be a particle having core-shell structure (hereinafter, occasionally referred to as core-shell rubber).

Here, the core-shell rubber described above can be a rubber particle having multilayer structure of two or more layers including, for example, an elastic inner layer as a core portion and a hard outer layer as a shell portion on the inner layer. The core portion and shell portion of the core-shell rubber can be each constituted of one layer or a plurality of layers, and one or more additional layers (intermediate layers) may be included between the inner layer and the outer layer.

If an acrylic rubber particle having core-shell structure is used as the rubber particle (A1), for example, an acrylic resin component only needs to be included in at least part of either one or both of the core portion and the shell portion.

The average particle size of the rubber particle (A1) is preferably 0.01 µm or more, and more preferably 0.08 µm or more for flexibility and film formability. In addition, the average particle size of the rubber particle (A1) is preferably 0.5 µm or less, and more preferably 0.3 µm or less for transparency and surface smoothness. The average particle size can be measured by using a dynamic light scattering method with a light scattering photometer (e.g., product name: "DLS-700", produced by Otsuka Electronics Co., Ltd.).

For example, an acrylic rubber particle described in WO 2014/192708 can be suitably used as the rubber particle (A1).

### - Thermoplastic polymer (A2)

The thermoplastic polymer (A2) only needs to be a thermoplastic polymer differing from the rubber particle (A1), and any appropriate known thermoplastic polymer can be used. However, it is preferable for weatherability and compatibility with the rubber particle (A1) that the thermoplastic polymer (A2) be a (co)polymer obtained through (co)polymerization of a monomer containing methacrylic acid alkyl ester as a primary component.

The primary component refers to the most abundant (most used) component (monomer) in a subject (here, all monomers to be used to produce the thermoplastic polymer (A2)). Examples of components other than methacrylic acid alkyl ester to be used for the thermoplastic polymer (A2) include acrylic acid alkyl ester, styrene, and maleic anhydride.

The mass-average molecular weight of the thermoplastic polymer (A2) is preferably 10,000 or more and 300,000 or less. If the mass-average molecular weight of the thermoplastic polymer (A2) is 10,000 or more, formation of a broken film is less likely to occur in film formation or handling, which is preferred. In addition, if the mass-average molecular weight of the thermoplastic polymer (A2) is 300,000 or less, appropriate elongation occurs in melting of raw material resins for a film, leading to better film formability.

The mass-average molecular weight of the thermoplastic polymer (A2) can be measured, as described in WO 2014/192708, by using gel permeation chromatography (e.g., product name: "HLC-8200", produced by Tosoh Corporation).

For the thermoplastic polymer (A2), for example, a thermoplastic polymer or polymerbased (e.g., satisfying the above range of mass-average molecular weight) processing aid, which are described in WO 2014/192708, can be used.

### - Additive (C1)

The additive (C1) is a compound differing from the rubber particle (A1) and the thermoplastic polymer (A2), and examples thereof include stabilizers, lubricants, processing aids, plasticizers, impact resistance improvers, foaming agents, fillers, colorants, and ultraviolet absorbers.

Among them, an ultraviolet absorber is preferably used as at least one kind of the additives (C1) to impart weatherability for protection of a substrate.

The molecular weight of the ultraviolet absorber described above is preferably 300 or more and 100,000 or less, and more preferably 400 or more and 10,000 or less. If the molecular weight of the ultraviolet absorber is 300 or more, the ultraviolet absorber is less volatilized in performing vacuum forming or pressure forming in a mold for injection molding, and thus the mold is less likely to be stained. If the molecular weight of the ultraviolet absorber is 100,000 or less, better dispersibility is achieved in the acrylic resin composition (A). The type of the ultraviolet absorber is not particularly limited, but use of, for example, a benzotriazole-based ultraviolet absorber having a molecular weight of 400 or more, or a triazine-based ultraviolet absorber having a molecular weight of 400 or more is preferred.

Examples of commercially available products of the benzotriazole-based ultraviolet absorber having a molecular weight of 400 or more include "Tinuvin 234" (product name, produced by Ciba-Geigy AG) and "ADK STAB LA-31" (product name, produced by ADEKA Corporation). Examples of commercially available products of the triazine-based ultraviolet absorber having a molecular weight of 400 or more include "Tinuvin 1577" (product name, produced by Ciba-Geigy AG). One of these ultraviolet absorbers may be used singly, and two or more thereof may be used in combination.

When an ultraviolet absorber is added as at least one kind of the additives (C1) to the acrylic resin composition (A), the addition amount of the ultraviolet absorber is preferably within the following range. Namely, the addition amount of the ultraviolet absorber is preferably 0 to 20 parts by mass, and more preferably 1 to 5 parts by mass, based on 100 parts by mass of the rubber particle (A1) and the thermoplastic polymer (A2) in total, for weatherability and bleed-out resistance.

From the viewpoint of further improving the weatherability, as the additive (C1), a radical scavenger such as a hindered amine-based photostabilizer is preferably used in combination with the ultraviolet absorber. Examples of commercially available products of the radical scavenger include "ADK STAB LA-57", "ADK STAB LA-62", "ADK STAB LA-67", "ADK STAB LA-63", and "ADK STAB LA-68" (product names, all produced by ADEKA Corporation); and "Sanol LS-770", "Sanol LS-765", "Sanol LS-292", "Sanol LS-2626", "Sanol LS-1114", and "Sanol LS-744" (product names, all produced by Sankyo Lifetech Co., Ltd.). One of these radical scavengers may be used singly, and two or more thereof may be used in combination.

The addition amount of the above radical scavenger in the acrylic resin composition (A) is preferably 0 to 10 parts by mass, and more preferably 0.2 to 5 parts by mass, based on 100 parts by mass of the rubber particle (A1) and the thermoplastic polymer (A2) in total, for weatherability and bleed-out resistance.

Use of a release agent as at least one kind of the additives (C1) is preferred from the viewpoint of preventing bonding to a press sheet, for example, when a laminated sheet is produced by using a press.

Examples of the release agent include silicone-based compounds, fluorine-based compounds, alkyl alcohols, and alkylcarboxylic acids. Among them, an alkylcarboxylic acid is preferably used as the release agent in terms of availability and economic efficiency.

Examples of the alkylcarboxylic acid to be used as the release agent include linoleic acid, vaccenic acid, stearic acid, oleic acid, margaric acid, palmitoleic acid, palmitic acid, and pentadecylic acid. One of these release agents may be used singly, and two or more thereof may be used in combination. The addition amount of the release agent in the acrylic resin composition (A) is not particularly limited, and can be appropriately set.

### (Polyolefin resin layer (II))

The polyolefin resin layer (II) is composed of a polyolefin resin composition (B), and can be a solidified product of the polyolefin resin composition (B).

In addition, the halogen element content of the polyolefin resin composition (B) (solid content) is set to less than 10% by mass from the viewpoint of reducing environmental loads in disposal by incineration. The more the halogen element content of the polyolefin resin composition (B) is, the better the adhesiveness between the acrylic resin layer (I) and a substrate tends to be; the less the halogen element content of the polyolefin resin composition (B) is, the more environmental loads in disposal by incineration are reduced.

In view of these, the halogen element content of the polyolefin resin composition (solid content) is preferably 0 to 5.0% by mass, more preferably 0 to 1.0% by mass, even more preferably 0 to 0.1% by mass, and particularly preferably 0% by mass.

The halogen element content of the polyolefin resin composition (B) (solid content) can be specified, for example, in the following manner.

Specifically, the halogen element content of a sample can be specified as follows: a sample (the above polyolefin resin composition (B)) is burned to generate combustion gas in a manner in accordance with IEC62321-3-2; thereafter, an absorbing solution into which the combustion gas generated has been absorbed is subjected to measurement by using an ion chromatograph to quantify the amounts of halogen elements contained in the sample.

The halogen elements in the polyolefin resin composition (B) may be derived from a polyolefin resin (B1) described later, or derived from another component (e.g., a polymer (B2) and an additive (C2), described later). That is, it is only required that the halogen element content of the total polyolefin resin composition (B) become less than 10% by mass as a result.

### [Polyolefin resin composition (B)]

The polyolefin resin composition (B) at least contains a polyolefin resin (B1), and further contains one or more additional components (e.g., a polymer (B2) and an additive (C2) etc., described later). The polyolefin resin (B1) may be an (unmodified) polyolefin resin or a modified polyolefin resin (e.g., modified with maleic anhydride etc.), or a combination of an unmodified polyolefin resin and a modified polyolefin resin.

Here, an additive (C2) is used for the polyolefin resin composition (B). A content of the additive (C2) in the polyolefin resin composition (B) is 0.01 parts by mass or more, based on 100 parts by mass of a polyolefin resin (B1) included in the polyolefin resin composition (B), or based on 100 parts by mass of the polyolefin resin (B1) and another polymer (B2) in total when the polyolefin resin composition (B) includes the polymer (B2), However, the polyolefin resin composition (B)
preferably contains 0.01 to 50 parts by mass of the additive (C2) differing from the polyolefin resin (B1) and a polymer (B2), based on 100 parts by mass of the polyolefin resin (B1) and the polymer (B2) in total. Moreover, the polyolefin resin composition (B) more preferably contains 1 to 40 parts by mass of the additive (C2), and even more preferably 5 to 30 parts by mass of the additive (C2), based on 100 parts by mass of the polyolefin resin (B1) and the polymer (B2) in total.

If the content of the additive (C2) in the polyolefin resin composition (B) is 0.01 parts by mass or more, better bondability and better thermal decomposition resistance are achieved; if the content of the additive (C2) in the polyolefin resin composition (B) is 50 parts by mass or less, better thermal deformation resistance, better rigidity, and better toughness are achieved.

The polymer (B2) may be used for the polyolefin resin composition (B), or not. In other words, the polyolefin resin composition (B) may be constituted of the (unmodified and/or modified) polyolefin resin (B1) and the additive (C2) (e.g., a tackifier).

The amounts of usage of the polyolefin resin (B1) and the polymer (B2) can be appropriately set. However, the polyolefin resin composition (B) preferably contains 50 to 100% by mass of the polyolefin resin (B1) and 0 to 50% by mass of the polymer (B2), based on 100% by mass of (B1) and (B2) in total.

The melt mass-flow rate (MFR) of the polyolefin resin composition (B) as measured in a manner in accordance with JIS K7210 (testing temperature: 190°C, testing load: 21.18 N) preferably satisfies the following range. Namely, the MFR of the polyolefin resin composition (B) is preferably 0.01 g/10 min or more and 10 g/10 min or less, and more preferably 0.1 g/10 min or more and 5.0 g/10 min or less. If the MFR is 0.01 g/10 min or more, extrusion processability can be kept good with ease; if the MFR is 10 g/10 min or less, on the other hand, the laminated film can be less likely to have unevenness of thickness or reduced mechanical strength.

The elastic modulus of the polyolefin resin composition (B) is preferably 2 to 3000 MPa, more preferably 10 to 1000 MPa, and even more preferably 30 to 500 MPa. If the elastic modulus of the polyolefin resin composition (B) is 2 MPa or more, blocking between films is readily prevented, and appropriate rigidity is imparted to the film to provide better handling properties. If the elastic modulus of the polyolefin resin composition (B) is 3000 MPa or less, appropriate flexibility is imparted to the film to provide better handling properties. The elastic modulus can be measured in a manner described later.

The elongation at break of the polyolefin resin composition (B) is preferably 50% or more, more preferably 100% or more, and even more preferably 300% or more. If the elongation at break of the polyolefin resin composition (B) is 50% or more, the laminated film of the present invention exhibits better elongation at break in a tensile test, and better elongation at maximum and better peel resistance in a tear test, and thus better handling properties.

Examples of commercially available products of the polyolefin resin composition (B) include the product name "ADMER" (produced by Mitsui Chemicals, Inc., halogen-free), the product name "MODIC F563" (produced by Mitsubishi Chemical Corporation, halogen-free, containing tackifier), and the product name "MODIC M512" (produced by Mitsubishi Chemical Corporation, halogen-free, tackifier-free).

The polyolefin resin composition (B) can be prepared by using any of various known techniques. For example, a technique can be used in which the components are mixed together by using a tumbler blender, a V-blender, a ribbon blender, a Henschel mixer, or the like, and after the mixing the components are melt-kneaded by using a single-screw extruder, a twin-screw extruder, a Bunbury mixer, a kneader, or the like and granulated or pulverized.

### - Polyolefin resin (B1)

As described above, the polyolefin resin (B1) may be an unmodified polyolefin resin (B1-1) or a modified polyolefin resin (B1-2), or a combination of these resins. In addition, one of these polyolefin resins (B1) may be used singly, and two or more thereof may be used as a mixture.

The blend ratio between the unmodified polyolefin resin (B1-1) and the modified polyolefin resin (B1-2) in the polyolefin resin (B1) is preferably set within the following range.

Specifically, it is preferable for the toughness and handling properties of the film that the polyolefin resin (B1) contain 30 to 90% by mass of (B1-1) and 10 to 70% by mass of (B1-2), based on 100% by mass of (B1-1) and (B1-2) in total.

Typically, achievement of higher molecular weight and structural control are more difficult for modified polyolefin resins than for unmodified polyolefin resins, and modified polyolefin resins occasionally undergo degradation of mechanical properties. Hence, use of a modified polyolefin resin and an unmodified polyolefin resin in combination allows achievement of both good mechanical properties and the effect byinclusion of the modifying functional group.

### I) Unmodified polyolefin resin (B1-1)

Any olefin (co)polymer which has not been subjected to modification treatment can be appropriately used for the unmodified polyolefin resin (B1-1). Examples of the unmodified polyolefin resin (B1-1) include a monopolymer (homopolymer) of an olefin (e.g., ethylene and propylene) (e.g., low-density polyethylene) and a copolymer of a plurality of olefins (e.g., products of ethylene-α-olefin copolymerization). These unmodified polyolefin resins can be produced by using any appropriate known method.

### II) Modified polyolefin resin (B1-2)

Any olefin (co)polymer which has been subjected to modification treatment can be appropriately used for the modified polyolefin resin (B1-2). Examples of the modified polyolefin resin (B1-2) include copolymer (b1) of an olefin and a polar monomer other than olefins, polyolefin resin (b2) modified with an unsaturated carboxylic acid or a derivative thereof, and polyolefin resin (b3) modified with a halogen element.

Examples of the copolymer (b1) of an olefin and a polar monomer other than olefins include ethylene-vinyl acetate copolymer, ethylene-(meth)acrylic acid copolymer, ethylene-methyl (meth)acrylate copolymer, ethylene-ethyl (meth)acrylate copolymer, ethylene-vinyl acetate-maleic anhydride terpolymer, ethylene-ethyl acrylate-maleic anhydride terpolymer, ethylene-glycidyl methacrylate copolymer, ethylene-vinyl acetate-glycidyl methacrylate terpolymer, and ethylene-ethyl acrylate-glycidyl methacrylate terpolymer.

The (total) content of the above polar monomer in the copolymer (b1) is preferably 1 to 50% by mass, and more preferably 10 to 40% by mass. If the content of the polar monomer in the copolymer (b1) is 1% by mass or more, good adhesiveness is readily achieved; if the content of the polar monomer in the copolymer (b1) is 50% by mass or less, appropriate crystallinity is readily achieved, appropriate material strength can be achieved, and good adhesion strength can be readily achieved.

Examples of the unsaturated carboxylic acid or derivative thereof to be used for modification of the polyolefin resin (b2) include unsaturated carboxylic acids including acrylic acid, maleic acid, fumaric acid, itaconic acid, and citraconic acid, and derivatives of them. Examples of the derivative include anhydride, amide, imide, and ester.

Among them, maleic acid or anhydride thereof is preferably used for thermal stability and water resistance.

The (total) content of the unsaturated carboxylic acid or derivative thereof in the polyolefin resin (b2) is preferably 0.01 to 20% by mass, more preferably 0.05 to 15% by mass, and even more preferably 0.10 to 7% by mass. If the content of the unsaturated carboxylic acid or derivative thereof in the polyolefin resin (b2) is 0.01% by mass or more, good adhesiveness is readily achieved; if the content of the unsaturated carboxylic acid or derivative thereof in the polyolefin resin (b2) is 20% by mass or less, partial generation of crosslinking can be readily prevented in production of the modified polyolefin resin (e.g., in graft copolymerization), superior formability can be imparted, and generation of fish eyes and particles or the like can be readily prevented, and hence a laminated film with superior product appearance can be readily obtained.

As described above, the polyolefin resin (B1) may be a polyolefin resin (b3) modified with a halogen element, and examples of the halogen element to be introduced include fluorine, chlorine, and bromine. Among them, chlorine is preferred as the halogen element in terms of availability and the adhesiveness between the acrylic resin layer (I) and a substrate.

However, in the present invention, the halogen element content of the polyolefin resin composition (B) is set to less than 10% by mass. Therefore, modification with a halogen element should also be performed in a manner such that this requirement is satisfied.

The more the halogen element content of the modified polyolefin resin (B1-2) is, the better the adhesiveness between the acrylic resin layer (I) and a substrate tends to be; the less the halogen element content of the modified polyolefin resin (B1-2) is, the more environmental loads in disposal by incineration tend to be reduced. In view of these, the halogen element content of the halogen-modified polyolefin resin is preferably less than 10% by mass, more preferably 5% by mass or less, and even more preferably 1% by mass or less.

When the modified polyolefin resin (B1-2) is used as at least one kind of the polyolefin resins (B1), for example, the modified polyolefin resin may be produced by copolymerizing modified monomers of the modified polyolefin resin in advance in the stage of polymer formation, or produced by subjecting once-formed polymer to graft polymerization with a modified monomer of the modified polyolefin resin. However, use of a graft-modified polyolefin resin is preferred because of availability.

### - Polymer (B2)

The polymer (B2) is not particularly limited if it is a polymer other than the polyolefin resin (B1), and any known polymer can be appropriately used.

Examples of the polymer (B2) include interpolymer (copolymer) of an olefin (e.g., ethylene and propylene) and a non-polar monomer (other than olefins) (e.g., styrene). Examples of the copolymer of an olefin and a non-polar monomer include styrene-ethylene butylene-styrene block polymer (SEBS).

### - Additive (C2)

A tackifier is used as at least one kind of the additives (C2) for adhesiveness. The tackifier is an amorphous resin in solid at normal temperature (temperature: 20°C). The tackifier can be appropriately selected for use from commercially available products. However, among them, petroleum resin, rosin-based resin, and terpene-based resin, and hydrogenated products of them are preferred.

Examples of the petroleum resin include aliphatic petroleum resin, aromatic petroleum resin, and copolymers of them, and hydrogenated products of them.

Examples of commercially available products of the petroleum resin include Alcon P and Alcon M (product names, all produced by Arakawa Chemical Industries, Ltd.), and ESCOREZ (product name, produced by Exxon Mobil Chemical Company).

Examples of the rosin-based resin include natural rosin, polymerized rosin, and derivatives of them. More specific examples of the rosin-based resin include pentaerythritol ester rosin, glycerin ester rosin, and hydrogenated products of them.

Examples of commercially available products of the rosin-based resin include Ester Gum, Pensel, Pine Crystal, and Hypale (product names, all produced by Arakawa Chemical Industries, Ltd.).

Examples of the terpene-based resin include terpene phenol-based resin and hydrogenated products thereof. Examples of commercially available products of the terpene-based resin include YS RESIN and CLEARON (product names, all produced by YASUHARA CHEMICAL CO., LTD.).

In the present invention, among these tackifiers, those preferably having a softening point (ring-and-ball method) of 70 to 150°C, more preferably having a softening point of 90 to 150°C, are used. The softening point of 70°C or more allows easy melt-kneading with ethylene-based resin while appropriate adhesion strength is maintained. In addition, from the viewpoint of controlling the hue of the laminated film to be colorless and transparent to the extent possible (preventing yellow coloring), use of any of the following tackifiers is preferred. Specifically, use of petroleum resin (e.g., aliphatic petroleum resin, aromatic petroleum resin, and copolymers of them, and hydrogenated products of them) as a tackifier is preferred, and, in particular, use of the hydrogenated product is more preferred.

In the range which does not inhibit the object of the present invention, the following substances can be appropriately blended in the polyolefin resin composition (B) in addition to the above additives: commonly used additives such as thermal stabilizers, weathering stabilizers, antiblocking agents, slipping agents, antistatic agents, flame retardants, neutralizers for catalyst residues, pigments, dyes, and inorganic and/or organic filler.

### (Resin layer (III))

The thickness and composition of the resin layer (III) are not particularly limited, and can be appropriately set. The resin layer (III) may be absent, and the laminated film of the present invention may be constituted of the above-described acrylic resin layer (I) and polyolefin resin layer (II).

If the polyolefin resin composition (B) constituting the polyolefin resin layer (II) has high tackiness, for example, the following things are achieved through lamination of a resin having low tackiness as the resin layer (III) on the resin layer (II): reliable prevention of the blocking of the laminated film, and further enhancement of productivity and handling properties.

If unevenness is generated in the surface of the resin layer (II), for example, by the composition of the polyolefin resin composition (B), the haze of the laminated film can be further reduced through lamination of the resin layer (III) used a resin composition which is less likely to cause surface unevenness.

Examples of the above-mentioned resin composition which has low tackiness and is less likely to cause surface unevenness include the same as the resin compositions shown for the acrylic resin composition (A). In particular, if the resin composition used for the resin layer (III) is the same as the resin composition used for the acrylic resin layer (I), the film has symmetric structure, which further prevents curling, leading to better handling properties. In addition, such a case is preferred in that film formation can be performed with a film formation apparatus consisting of two extruders since only two kinds of resin compositions (the acrylic resin composition (A) and the polyolefin resin composition (B)) are used, and thus production can be made with simple equipment.

### <Properties of laminated film>

### (Thickness)

The total thickness of the laminated film according to the present invention is preferably 10 to 500 µm, more preferably 20 to 100 µm, and even more preferably 25 to 80 µm. If the thickness is 10 µm or more, durability such as tensile resistance and tear resistance is further enhanced. In addition, production of the laminated film is easier. Moreover, sufficient weatherability can be readily imparted when the laminated film is laminated on a substrate.

If the thickness is 500 µm or less, on the other hand, the laminated film has appropriate flexibility, and hence peeling can be readily prevented in cutting a laminate to be obtained. In addition, such thickness is economically advantageous in terms of mass per unit area. Further, such thickness stabilizes film formability, leading to easy production of the laminated film.

The composition ratio for each layer of the laminated film layer according to the present invention can be appropriately set in accordance with required physical properties. If high weatherability is needed, it is suitable to raise the ratio of the acrylic resin layer (I); if high flexibility and high strength and high peel resistance are required, it is suitable to raise the ratio of the polyolefin resin layer (II). For example, the thickness of the polyolefin resin layer (II), as the thickness of the acrylic resin layer (I) is regarded as 1, is preferably 0.01 to 100, more preferably 0.05 to 10, and even more preferably 0.10 to 5.

If the resin layer (III) is provided to the laminated film, it is preferable for prevention of curling and simplicity for production equipment that the resin layer (III) have the same composition and thickness as the acrylic resin layer (I).

Each of the thicknesses of the acrylic resin layer (I) and the resin layer (III) is preferably 1 to 400 µm, more preferably 5 to 50 µm, and even more preferably 20 to 50 µm. If each of the thicknesses of the acrylic resin layer (I) and the resin layer (III) is 1 µm or more, better weatherability and better water resistance are imparted to a laminate including the laminated film and a substrate. If each of the thicknesses of the acrylic resin layer (I) and the resin layer (III) is 400 µm or less, an economic advantage is achieved in terms of mass per unit area.

The thickness of the polyolefin resin layer (II) is preferably 0.5 to 100 µm, more preferably 2 to 80 µm, and even more preferably 10 to 50 µm. If the thickness of the polyolefin resin layer (II) is 0.5 µm or more, flexibility and tear properties are further enhanced. If the thickness of the polyolefin resin layer (II) is 100 µm or less, an economic advantage is achieved in terms of mass per unit area.

### (Appearance)

### [Transmittance]

The total light transmittance of the laminated film according to the present invention is preferably 90% or more, more preferably 91% or more, and even more preferably 92% or more. If the total light transmittance is 90% or more, for example, in use for protection of a decorative board, patterns on a decorative layer as a base is readily prevented from being blurred, and thus a decorative board excellent in design can be obtained with ease. The total light transmittance of the laminated film can be measured in a manner in accordance with JIS K7361-1.

The transmittance of the laminated film according to the present invention at a wavelength of 370 nm is preferably less than 1.0%, and more preferably less than 0.2%. If the transmittance at a wavelength of 370 nm is less than 1.0%, for example, in use for protection of a decorative board, a decorative layer as a base and a substrate resin are readily prevented from being degraded by ultraviolet rays, and thus a decorative board superior in weatherability and durability can be obtained with ease. The transmittance of the laminated film at a wavelength of 370 nm can be measured by using an ultraviolet-visible spectrometer (e.g., product name: "V-630", produced by JASCO Corporation).

### [Haze (haze value)]

The haze of the laminated film according to the present invention is preferably 20 or less, more preferably 5 or less, even more preferably 2 or less, and particularly preferably 1 or less. If the haze is 20 or less, for example, in use for protection or overlay of a decorative board, patterns on a decorative layer as a base is readily prevented from being blurred, and thus a decorative board excellent in design can be obtained with ease. The haze of the laminated film can be measured in a manner in accordance with JIS K7136.

Among the haze of the laminated film alone, the external haze derived from surface unevenness becomes nearly zero after lamination with a substrate, and hence the appearance after lamination with a substrate strongly depends on the internal haze.

Here, the internal haze of the laminated film according to the present invention is preferably 5 or less, more preferably 1.0 or less, and even more preferably 0.5 or less.

### [Yellowness index]

The yellowness index of the laminated film according to the present invention is preferably 10 or less, more preferably 5 or less, and even more preferably 2 or less. If the yellowness index is 10 or less, for example, in use for protection or overlay of a decorative board, patterns on a decorative layer as a base is readily prevented from discoloring, and thus a decorative board excellent in design can be obtained with ease.

### (Tensile test)

### [Tensile modulus]

The tensile modulus of the laminated film according to the present invention is preferably 20 to 3000 MPa, more preferably 100 to 1500 MPa, and even more preferably 300 to 1000 MPa. The tensile modulus can be measured in a manner described later. If the tensile modulus of the laminated film is 20 MPa or more, appropriate rigidity is imparted to the film to provide better handling properties. If the tensile modulus of the laminated film is 3000 MPa or less, flexibility is imparted to the film to provide better handling properties. In particular, in using as an overlay film, followability to curved surfaces tends to be better as the tensile modulus is lower.

### [Tensile elongation at break]

From the viewpoint of film formability and handling properties of the film, the tensile elongation at break of the laminated film according to the present invention is preferably 5% or more, more preferably 20% or more, and even more preferably 50% or more. The upper limit of the elongation at break is not particularly limited, and can be, for example, 1000% or less. The elongation at break can be measured in a manner described later.

If the elongation at rupture of the acrylic resin layer (I) and that of the polyolefin resin layer (II) are different in the laminated film of the present invention, only one resin layer may be ruptured with the other resin layer left unruptured. In the present invention, an elongation when any one or more of the resin layers constituting the laminated film are ruptured is defined as the elongation at break. Accordingly, the tensile elongation at break of the laminated film is largely influenced by a resin layer having the lowest tensile elongation at rupture among the respective resin layers. For this reason, use of resin compositions having high tensile elongation at rupture for all the resin layers constituting the laminated film is preferred in order to enhance the tensile elongation at break of the laminated film.

### (Tear test)

### [Tear strength]

The tear strength of the laminated film according to the present invention is preferably 10 N/mm or more, more preferably 50 N/mm or more, and even more preferably 70 N/mm or more. If the tear strength of the laminated film is 10 N/mm or more, better film formability and better handling properties are achieved. In particular, such tear strength is preferred in using the laminated film as an overlay film, because the film is less likely to be damaged during bonding operations.

### [Tear elongation at rupture]

From the viewpoint of film formability and handling properties of the film, the tear elongation at rupture of the laminated film according to the present invention is preferably 10 mm or more, more preferably 40 mm or more, and even more preferably 60 mm or more. The upper limit of the elongation at rupture is not particularly limited, and, for example, can be 300 mm or less. The elongation at rupture can be measured in a manner described later.

### [Tear elongation at maximum stress]

The tear elongation at maximum stress of the laminated film refers to an elongation until the break of the laminated film by tearing starts, and larger values of tear elongation at maximum stress indicate that the laminated film has higher durability to deformation by tearing.

From the viewpoint of film formability and handling properties of the film, the tear elongation at maximum stress of the laminated film according to the present invention is preferably 2 mm or more, more preferably 5 mm or more, even more preferably 10 mm or more, and particularly preferably 20 mm or more. The upper limit of the tear elongation at maximum stress is not particularly limited, and, for example, can be 300 mm or less. The tear elongation at maximum stress can be measured in a manner described later.

### <Method for producing laminated film>

A method for producing the laminated film according to the present invention is not particularly limited, if the method is a method capable of laminating the above-described acrylic resin layer (I) and polyolefin resin layer (II), and any method known in the field of laminated films can be appropriately used.

For productivity, however, it is preferred to employ a method for forming a laminated structure including the resin layers (I) and (II) (and the resin layer (III), as necessary) by a coextrusion method via a feed-block die or a multi-manifold die.

Alternatively, a method may be used in which the resin layers (I) and (II) (and the resin layer (III), as necessary) are each molded into a film through a melt extrusion method or the like using a T-die and the two (or three) kinds of films are laminated through a thermal lamination method.

In addition, an extrusion lamination method can be used in which one resin layer is formed into a film and after that, the other resin layer (or other resin layers) are laminated through a melt extrusion method.

In the case that melt extrusion is performed in producing the laminated film, a resin composition (for formation of each resin layer) in the state of a melt can be extruded concomitantly with filtering through a screen mesh having a mesh size of 200-mesh or more in order to remove nuclei and impurities which cause surface defects.

### <Laminate>

The laminate according to the present invention includes the above-described laminated film of the present invention and a resin substrate, wherein the acrylic resin layer (I), the polyolefin resin layer (II), and the resin substrate are laminated in the order presented. Since the laminated film of the present invention has superior adhesiveness and can adhere to various substrates, the laminated film can play a role as a protective film for the resin substrate in the laminate.

Examples of the resin substrate include acrylic resin;
ABS resin (acrylonitrile-butadiene-styrene copolymer); AS resin (acrylonitrile-styrene copolymer); vinyl chloride resin; polyolefin-based resin such as polyethylene, polypropylene, polybutene, and polymethylpentene; ethylene-vinyl acetate copolymer or saponified products thereof; polyolefin-based copolymer such as ethylene-acrylate copolymer and ethylenemethacrylate copolymer; polyester-based resin such as polyethylene terephthalate, polybutylene terephthalate, polyethylene naphthalate, polyarylate, and polycarbonate; polyamide-based resin such as 6-nylon, 6,6-nylon, 6,10-nylon, and 12-nylon; polystyrene resin; cellulose derivatives such as cellulose acetate and nitrocellulose; fluorine-based resin such as polyvinyl fluoride, polyvinylidene fluoride, polytetrafloroethylene, and ethylene-tetrafloroethylene copolymer; and copolymers, mixtures, complexes, and laminates of two or more selected from those.

Among them, as the resin substrate, use of a resin selected from ethylene-vinyl acetate copolymer (EVA) resin, polyethylene terephthalate (PET), and polypropylene (PP) resin is preferred in terms of low cost, versatility, excellent applicability to various uses, and the effect of the laminated film applied as the resin substrate.

A method of laminating the laminated film and the resin substrate is not particularly limited, and examples thereof include a thermal lamination method, an insert molding method, an in-mold molding method, a co-extrusion method, and an application method in which the substrate is dissolved in a solvent. Among them, in terms of workability and economic efficiency, use of a thermal lamination method or a co-extrusion method is preferred in the case that the laminated film and the resin substrate each have two-dimensional shape such as the shape of a plate, and use of an insert molding method or an in-mold molding method is preferred in the case of three-dimensional shape.

If the laminated film according to the present invention is not used and, for example, a monolayer film consisting of the acrylic resin layer (I) is used for a laminate, the following thing is expected: the monolayer film has lower adhesiveness to the substrate than the laminated film of the present invention, and hence use of an adhesive or primer is required, which results in higher cost and largely reduced productivity. In contrast, use of an adhesive or primer is not required in using the laminated film according to the present invention for a laminate, and hence man-hours and thus cost can be reduced, leading to advantages in an industrial sense.

### <Protective film and overlay film>

The protective film and overlay film according to the present invention each include the above-described laminated film of the present invention. Since the laminated film of the present invention is superior in weatherability, flexibility, tear properties, and adhesiveness (bondability), the laminated film can be suitably used as at least a part of a protective film. In particular, since the laminated film of the present invention is superior in flexibility and tear properties, the laminated film provides good workability in bonding operations, and can be preferably used as at least a part (e.g., a substrate) of an overlay film.

The overlay film according to the present invention can be produced by, as necessary, laminating a suitable pressure-sensitive adhesive on the laminated film according to the present invention (e.g., on the polyolefin resin layer (II) or the resin layer (III)) followed by, as necessary, applying a coating to the release layer or the surface.

If the laminated film according to the present invention is not used and, for example, a monolayer film consisting of the acrylic resin layer (I) is used for an overlay film, the following thing is expected: the monolayer film is poor in flexibility and tear properties as compared with the laminated film of the present invention, and hence results in lowered workability in bonding the film, leading to largely lowered productivity.

### Examples

Hereinafter, the present invention will be described in more detail with reference to Examples; however, the present invention is not limited to these Examples. In Examples and Comparative Examples, the term "part(s)" indicates "part(s) by mass", unless otherwise stated. Abbreviations in Examples and Comparative Examples are as follows.

### [Thermoplastic polymer (A2)]

MD: "ACRYPET MD001" (product name, produced by Mitsubishi Chemical Corporation, rubber-free acrylic resin)
PEG: "PEG 20000" (product name, produced by Sanyo Chemical Industries, Ltd., polyethylene glycol)

### [Polyolefin resin (B1)]

### - Unmodified polyolefin resin (B1-1)

PE1: linear ethylene-1-butene copolymer (density: 0.920 g/cm³, MFR: 2 g/10 min (190°C, 2.16 kg))
PE2: low-density polyethylene (density: 0.919 g/cm³, MFR: 2 g/10 min (190°C, 2.16 kg))
PE3: linear ethylene-octene copolymer (density: 0.870 g/cm³, MFR: 1 g/10 min (190°C, 2.16 kg))
A-1085S: "TAFMER A-1085S" (product name, produced by Mitsui Chemicals, Inc., product of copolymerization of ethylene-α-olefin)

### - Modified polyolefin resin (B1-2)

EB050S: "REXPEARL EB050S" (product name, produced by Japan Polyethylene Corporation, ethylene-methyl acrylate copolymer, tensile modulus: lower than 10 MPa, elongation at rupture: 300% or more, halogen element content: 0% by mass)

### [Polymer (B2)]

SEBS1: "Tuftec M1943" (product name, produced by Asahi Kasei Corporation, styrenebased elastomer)
SEBS2: "Tuftec H1043" (product name, produced by Asahi Kasei Corporation, styrenebased elastomer)

### [Additive]

Tackifier: "Alcon P-115" (product name, produced by Arakawa Chemical Industries, Ltd.)
LA-31: "ADK STAB LA-31RG" (product name, produced by ADEKA Corporation)
TV234: "Tinuvin 234" (product name, produced by BASF SE)
C2020: "Chimassorb 2020" (product name, produced by BASF SE)
Irg1076: "Irganox 1076" (product name, produced by BASF SE)

### [Substrate]

PET: "COSMOSHINE A4100" (product name, produced by TOYOBO CO., LTD., thickness: 100 µm, a laminated film was bonded to the smooth surface)
PP: "NOVATEC FY4" (product name, produced by Japan Polypropylene Corporation, polypropylene)
EVA: "CIKcap FLCE-51" (product name, produced by C.I. Kasei CO., LTD., thermosetting EVA sheet, thickness: 450 µm)

Measurement of physical properties in each of Examples and Comparative Examples was conducted in a manner below. Not all of the physical properties described below were measured in Examples and Comparative Examples, and physical properties not measured were each denoted as "-" in Tables shown later.

### (1) Total light transmittance, haze, internal haze, and yellowness index of (laminated) film

The total light transmittance, haze, and yellowness index of each (laminated) film were measured and evaluated by using methods in accordance with JIS K7361-1, JIS K7136, and JIS K7373, respectively. The internal haze of each (laminated) film was calculated by subtracting 1.1, the haze of a PET substrate, from the haze of a laminate composed of the (laminated) film and the PET substrate.

### (2) Evaluation of interlayer adhesion of (laminated) films and adhesion of (laminated) films to substrate

At a temperature of 23°C, each laminate composed of a (laminated) film and a substrate (PET substrate, EVA substrate, or PP substrate) was cut with a box cutter from the outer surface side of the (laminated) film (e.g., acrylic resin (I) side in Example 1 described later) to a depth (of the inside of the substrate) such that the (laminated) film was penetrated through and the substrate was not penetrated through to form a grid of 100 squares with intervals of 1 mm. At the same temperature, cellophane tape (registered tradename, produced by Nichiban Co., Ltd.) was then applied to cover the grid, and thereafter the cellophane tape was peeled off. Then, the interlayer adhesion of a (laminated) film and adhesion (bondability) of a (laminated) film to the substrate were evaluated on the basis of evaluation criteria below. In the evaluation, the interface resulting from peeling was checked through microscopy and infrared spectrometry. In evaluation of the interlayer adhesion of a laminated film, a PET substrate was used as a substrate in Examples 1 to 9, and a polymethyl methacrylate resin (PMMA) substrate (product name: ACRYLITE L#001, produced by Mitsubishi Chemical Corporation) was used as a substrate in Examples 10 to 21. Needless to say, evaluation of interlayer adhesion was not conducted for a film composed of one layer (e.g., a film in Comparative Example 1 described later). In addition, in Examples and Comparative Examples, evaluation of adhesion to a substrate was conducted for at least one of PET, EVA, and PP substrates.

### - Evaluation criteria for interlayer adhesion

O: No interlayer peeling of a laminated film was found for all of the squares.
Δ: Interlayer peeling of a laminated film was found for one or more and nine or less squares.
×: Interlayer peeling of a laminated film was found for 10 or more squares.

### - Evaluation criteria for adhesion (bondability) to substrate

O: No peeling of a (laminated) film from a substrate was found for all of the squares.
Δ: Peeling of a (laminated) film from a substrate was found for one or more and nine or less squares.
×: Peeling of a (laminated) film from a substrate was found for 10 or more squares.

### (3) Thicknesses of each resin layer

A piece of appropriate size (e.g., 5 cm × 5 cm) was cut out of each (laminated) film, and the thicknesses of each resin layer constituting the (laminated) film were measured by using the reflection spectroscopic thickness meter FE 3000 (product name, produced by Otsuka Electronics Co., Ltd.).

### (4) Tensile test

A piece of 150 mm × 15 mm was cut out from each film obtained, where the long side corresponded to the direction of film formation, and a tensile test was conducted by using an Autograph Tensile Tester (product name, produced by Shimadzu Corporation) with a distance between chucks of 100 mm and a tensile speed of 50 mm/min to measure the elastic modulus, (strength at maximum), and elongation at break of the film. For a laminated film, an elongation when any one of the resin layers constituting the laminated film was ruptured was used as the elongation at break.

### (5) Tear test

A tear test in a manner in accordance with the right angled tear method in JIS K7128-3 was conducted for each film obtained to measure the tear strength, tear elongation at rupture, and tear elongation at maximum stress. In the tear test, a precision universal tester (Autograph), model AGS-X, produced by Shimadzu Corporation was used, and the tear test was conducted under the conditions of a temperature of 25°C, an initial grip interval of 50 mm and a tensile speed of 200 mm/min.

Further, the ruptured surface of the test piece subjected to the tear test was observed, and evaluation of peel resistance was conducted on the basis of the following evaluation criteria.

### - Evaluation criteria

⊙: The width of a portion with interlayer peeling in resin layers constituting a laminated film was less than 2 mm at the longest.
O: The width of a portion with interlayer peeling was 2 mm or more and less than 4 mm at the longest.
Δ: The width of a portion with interlayer peeling was 4 mm or more and less than 6 mm at the longest.
×: The width of a portion with interlayer peeling was 6 mm or more at the longest.

### (6) Elastic modulus and elongation at break of resin composition

First, a resin composition as a subject of measurement was molded into a film of 50 µm in thickness in a manner as in Comparative Example 1 described later. Second, the resulting film was subjected similarly to (4) Tensile test as described above to measure the elastic modulus and elongation at break of the resin composition.

### (7) Transmittance of (laminated) film at wavelength of 370 nm

The transmittance of each (laminated) film at a wavelength of 370 nm was measured by using an ultraviolet-visible spectrometer (product name: "V-630", produced by JASCO Corporation).

### (8) Evaluation of weatherability against coloring and weatherability for adhesion

A laminate composed of a laminated film and a substrate, or a single substrate was used as a subject of measurement (test subject), and in a test for a laminate, the outer surface of a laminated film laminated on a substrate was used as a surface to be tested, and weatherability against coloring (yellowness index) and weatherability for adhesion (adhesion) were evaluated in the following manner: specifically, a test was conducted for a subject of measurement by using the tester METALWEATHER (product name, produced by DAIPLA WINTES CO., LTD.), where the subject of measurement was subj ected to 24-hour cycles each including irradiation (53°C, 50%RH (relative humidity)) at an irradiation intensity of 65 W/m² (300 to 400 nm) through a KF-1 filter (295 to 780 nm) for 20 hours and wetting (30°C, 95%RH, showering before and after the initiation) for 4 hours, for 240 hours in total. Changes in the yellowness index and adhesion for a subject of measurement before and after the test were evaluated similarly by using the above method for yellowness indexes in (1) and the method for evaluation of adhesion to a substrate in (2).

### (9) Evaluation of weatherability for flexibility

A laminate composed of a laminated film and a substrate, a laminated film, each single resin layer, or a single substrate was used as a subject of measurement (test subject), and the weatherability for flexibility (elongation at break) was evaluated in the following manner: specifically, a test was conducted for a subject of measurement by using the tester METALWEATHER type F (product name, produced by DAIPLA WINTES CO., LTD.), where the subject of measurement was subjected to a 24-hour cycle or 24-hour cycles each only including irradiation (temperature: 60°C) at an irradiation intensity of 80 W/m² (300 to 400 nm) through a KF-2 filter (295 to 430 nm), for 24 hours (one cycle) or 48 hours (two cycles) in total. Before and after the test, the (4) Tensile test was conducted for the subject of measurement to measure the elongation at break for evaluation of the weatherability for flexibility.

### <Production Example 1: production of rubber particle (A1-1)>

An acrylic rubber particle (A1-1) (average particle size: 0.28 µm) having core-shell structure was obtained in the same manner as in Production Example 1 described in WO 2014/192708.

### <Production Example 2: production of rubber particle (A1-2)>

An acrylic rubber particle (A1-2) (average particle size: 0.12 µm) having core-shell structure was obtained in the same manner as in Production Example 2 described in WO 2014/192708.

### <Production Example 3: production of rubber particle (A1-3)>

An acrylic rubber particle (A1-3) (corresponding to rubber-containing multistage polymer (I)-1 in WO 2015/156323) having core-shell structure was obtained in the same manner as in Example 1 described in WO 2015/156323.

### <Production Example 4: production of thermoplastic polymer (A2-1)>

A thermoplastic polymer (A2-1) (mass-average molecular weight: 1,000,000) was obtained in the same manner as in Production Example 5 described in WO 2014/192708.

### <Production Examples 5 to 10: production of acrylic resin compositions (A-1) to (A-6)>

In each of Production Examples 5 to 10, the rubber particles obtained in Production Examples 1 to 4 above and other materials were mixed together with the corresponding blend ratio shown in Table 1 below by using a Henschel mixer; subsequently, the resulting mixture was melt-kneaded to pelletize by using a twin-screw extruder (L/D = 26) equipped with 35 mmϕ (diameter) screws at a cylinder temperature of 200 to 240°C and a die temperature of 240°C, providing each of acrylic resin compositions (A-1) to (A-6).

The blend ratio of raw materials for each acrylic resin composition produced, and the properties of each acrylic resin composition obtained are shown in Table 1 below.

### [Table 1]

**Table 1**

| Acrylic resin composition (A) | Blend ratio [part by mass] | | | | | | | | | | Properties | |
|---|---|---|---|---|---|---|---|---|---|---|---|---|
| | Rubber particle (A1) | | | Thermoplastic polymer (A2) | | | Additive (C1) | | | | Elastic modulus | Elongation at break |
| | A1-1 | A1-2 | A1-3 | A2-1 | MD | PEG | LA-31 | TV234 | C2020 | Irg1076 | [MPa] | [%] |
| A-1 | 20 | - | - | 2 | 80 | - | 2.1 | 2.1 | 0.34 | 0.1 | 2500 | 10 |
| A-2 | - | 100 | - | 2 | - | - | 2.1 | - | 0.34 | 0.1 | 1400 | 100 |
| A-3 | - | 100 | - | 2 | - | - | 2.1 | 2.1 | 0.34 | 0.1 | 1400 | 100 |
| A-4 | - | - | 100 | 2 | - | - | 2.1 | 2.1 | 0.34 | 0.1 | 520 | 110 |
| A-5 | - | - | 95 | 2 | - | 5 | 2.1 | 2.1 | 0.34 | 0.1 | 450 | 140 |
| A-6 | - | - | 90 | 2 | - | 10 | 2.1 | 2.1 | 0.34 | 0.1 | 220 | 130 |

### <Production Example 11: production of modified polyolefin resin>

By using a Super Mixer, 100 parts of PE1, 1 part of maleic anhydride, and 0.04 parts of t-butyl peroxybenzoate (produced by NOF CORPORATION, PERBUTYL D) were mixed together for 1 minute. Thereafter, the resulting mixture was melt-kneaded by using a twin-screw extruder (diameter: 30 mm, L/D: 42) under the conditions of a kneading temperature of 230°C, a screw rotation frequency of 300 rpm and a discharge rate of 15 kg/hr. The melt-kneaded product obtained was extruded from a die into strand shape, which were cut to afford a modified ethylene-based polymer composition (component (MAH-g-PE)) as a modified polyolefin resin (B1-2).

### <Production Example 12: production of polyolefin resin composition (B-1)>

Raw materials blended in amounts shown in Table 2 were mixed together by using a Super Mixer for 1 minute, and then melt-kneaded by using a twin-screw extruder (diameter: 30 mm, L/D: 42) under the conditions of a kneading temperature of 230°C, a screw rotation frequency of 300 rpm and a discharge rate of 15 kg/hr. The melt-kneaded product obtained was extruded from a die into strand shape, which were cut to afford a polyolefin resin composition (B-1).

### <Production Examples 13 to 15: production of polyolefin resin compositions (B-2) to (B-4)>

Polyolefin resin compositions (B-2) to (B-4) were obtained in the same manner as in Production Example 12, except that the amounts to be blended were changed as shown in Table 2.

### <Production Example 16: production of polyolefin resin composition (B-5)>

Raw materials blended in amounts shown in Table 2 were mixed together by using a Henschel mixer, and then melt-kneaded by using a twin-screw extruder (L/D = 26) equipped with 35 mmϕ screws under the conditions of a cylinder temperature of 200 to 240°C and a die temperature of 240°C. The melt-kneaded product obtained was pelletized to afford a polyolefin resin composition (B-5).

### <Production Example 17: production of polyolefin resin composition (B-6)>

A polyolefin resin composition (B-6) was obtained in the same manner as in Production Example 16, except that the amounts to be blended were changed as shown in Table 2.

The blend ratio of raw materials for each polyolefin resin composition produced, and the properties of each polyolefin resin composition obtained are shown in Table 2 below.

### [Table 2]

**Table 2**

| Polyolefin resin composition (B) | Blend ratio [part by mass] | | | | | | | | | Halogen element content | Properties | |
|---|---|---|---|---|---|---|---|---|---|---|---|---|
| | Polyolefin resin (B1) | | | | | Polymer (B2) | | Additive (C2) | | | Elastic modulus | Elongation at break |
| | Unmodified polyolefin resin (B1-1) | | | Modified polyolefin resin (B1-2) | | | | | | | | |
| | PE2 | PE3 | A-1085S | MAH-g-PE | EB050S | SEBS1 | SEBS2 | Tackifier | Irg1076 | [% by mass] | [MPa] | [%] |
| B-1 | 25 | - | - | 38 | - | 12 | 25 | 25 | - | 0 | 40 | >300 |
| B-2 | - | 78 | - | 22 | - | - | - | 11 | - | 0 | 40 | >300 |
| B-3 | - | 89 | - | 11 | - | - | - | 11 | | 0 | 40 | >300 |
| B-4 | - | 70 | - | 30 | - | - | - | - | - | 0 | 60 | >300 |
| B-5 | - | - | - | - | 100 | - | - | 25 | 0.1 | 0 | <10 | >300 |
| B-6 | - | - | 100 | - | - | - | - | 18 | 0.1 | 0 | <10 | >300 |

### <Example 1: production of laminated film>

In Example 1, the acrylic resin composition (A-2) for the acrylic resin layer (I), which was obtained in Production Example 6, was dried at a temperature of 80°C for a whole day and night, and the resultant was used. The polyolefin resin composition (B-1) was used as a resin for the polyolefin resin layer (II).

First, the acrylic resin composition (A-2) dried at a temperature of 80°C for a whole day and night was plasticized by using a 40 mmϕ extruder with the cylinder temperature set to 240°C. In addition, the polyolefin resin composition (B-1) was plasticized by using a 30 mmϕ extruder provided with a screen mesh of 400-mesh with the cylinder temperature set to 230°C.

Subsequently, these resin compositions were formed into a laminated film having a total thickness of 50 µm through a multi-manifold die for two layers with two materials with the temperature set to 240°C. The thicknesses of the acrylic resin layer (I) and the polyolefin resin layer (II) were 45 µm and 5 µm, respectively. Results of the above-described evaluations for the laminated film obtained are shown in Table 3.

Further, the laminated film obtained was laminated on PET, EVA, or PP as a substrate with the polyolefin resin layer (II) side facing the substrate, and the resultant was pressurized with heating in a heat press machine at a pressure of 3 MPa and a temperature of 140°C for 5 minutes to produce a laminate of the laminated film and the substrate. the above-described evaluation of adhesion for the laminate obtained was performed, and the evaluation results obtained are shown in Table 3. In addition, results of evaluation of weatherability against coloring and weatherability for adhesion for the laminate obtained are shown in Table 5, and results of evaluation of weatherability for flexibility are shown in Table 6.

### <Examples 2 to 9: production of laminated films>

Laminated films and laminates were obtained in the same manner as in Example 1, except that the resin compositions for the acrylic resin layer (I) and the polyolefin resin layer (II), and the thicknesses of these layers were changed as shown in Table 3. Results of evaluations for the laminated films and laminates are shown in Table 3

### <Comparative Examples 1, 3: production of monolayer films>

In Comparative Example 1, the acrylic resin composition (A-2) dried at a temperature of 80°C for a whole day and night was plasticized by using a 30 mmϕ extruder with the cylinder temperature set to 240°C, and formed into a (monolayer) film of 50 µm in thickness through a monolayer T-die with the temperature set to 240°C.

In Comparative Example 3, a (monolayer) film of 50 µm in thickness was formed in the same manner as in Comparative Example 1, except that the polyolefin resin composition (B-1) was used in place of the acrylic resin composition (A-2). Results of evaluation of each of the produced film are shown in Table 3, 4 and 6.

### <Example 10: production of laminated film>

In Example 10, the acrylic resin layer (I) and the acrylic resin composition (A-3) for the polyolefin resin layer (III), which was obtained in Production Example 7, was dried at a temperature of 80°C for a whole day and night, and the resultant was used. In addition, the polyolefin resin composition (B-1) was used as a resin for the polyolefin resin layer (II).

First, the acrylic resin composition (A-3) dried at a temperature of 80°C for a whole day and night was plasticized by using a 30 mmϕ extruder with the cylinder temperature set to 240°C. The polyolefin resin composition (B-1) was plasticized by using a 40 mmϕ extruder with the cylinder temperature set to 230°C. Subsequently, these resin compositions were formed into a laminated film having a total thickness of 50 µm through a multi-manifold die for three layers with two materials with the temperature set to 240°C. Here, the thicknesses of the acrylic resin layer (I), the polyolefin resin layer (II), and the resin layer (III) were 5 µm, 40 µm, and 5 µm, respectively. The acrylic resin layer (I) and the resin layer (III) were made by using the same acrylic resin composition (A-3).

Further, the laminated film obtained was laminated on a PMMA sheet (product name: ACRYLITE L#001, produced by Mitsubishi Chemical Corporation) with the resin layer (III) side facing the PMMA sheet, and the resultant was pressurized with heating in a heat press machine at a pressure of 3 MPa and a temperature of 140°C for 5 minutes to produce a laminate of the laminated film and the substrate. The laminate obtained was evaluated for interlayer adhesion. Evaluation results for the laminated film obtained are shown in Table 4.

### <Examples 11 to 16 and 18 to 21, Reference Example 17, Comparative Example 2: production of laminated films>

Laminated films were obtained in the same manner as in Example 10, except that the resin compositions for each of the resin layers constituting a laminated film and the thickness of these layers were changed as shown in Table 4. Results of evaluations for each of the laminated films obtained are shown in Table 4 and Table 6.

### <Comparative Example 4: single substrate>

In Comparative Example 4, evaluations of weatherability against coloring, weatherability for adhesion, and weatherability for flexibility were performed for a single PET substrate without the laminated film of the present invention laminated thereon. Results of the evaluations are shown in Table 5 and Table 6.

### [Table 3]

**Table 3**

| | (Laminated) film | | | | Evaluation results | | | | | | | | | | | |
|---|---|---|---|---|---|---|---|---|---|---|---|---|---|---|---|---|
| | Acrylic resin layer (I) | | Polyolefin resin layer (II) | | Appearance | | | | | Tensile test | | | Adhesion | | | |
| | Acrylic resin composition (A) | Thickness | Polyolefin resin composition (B) | Thickness | Total light transmittance | Transmittance at 370 nm | Haze | Internal haze | Yellowness index | Elastic modulus | Elongation at break | Strength at maximum | Interlayer adhesion | Adhesion to substrate | | |
| | | [µm] | | [µm] | [%] | [%] | | | | [MPa] | [%] | [MPa] | | PET | EVA | PP |
| Example 1 | A-2 | 45 | B-1 | 5 | 90.8 | 0.1 | 10.4 | 0.4 | 1.9 | 1250 | 80 | 33 | ○ | ○ | ○ | Δ |
| Example 2 | A-2 | 27 | B-1 | 3 | 90.9 | 1.3 | 11.1 | - | 1.9 | - | - | - | ○ | ○ | - | - |
| Example 3 | A-2 | 25 | B-1 | 25 | 90.7 | 1.8 | 10.8 | - | 2.2 | 730 | 80 | 20 | ○ | ○ | ○ | Δ |
| Example 4 | A-2 | 50 | B-1 | 50 | 90.5 | 0.1 | 10.7 | - | 3.2 | - | - | - | ○ | ○ | - | - |
| Example 5 | A-2 | 45 | B-4 | 5 | 91.8 | 0.2 | 5.5 | - | 2.0 | 1180 | 100 | 33 | Δ | ○ | - | - |
| Example 6 | A-2 | 45 | B-2 | 5 | 89.6 | 0.2 | 15.5 | - | 5.7 | 1150 | 80 | 32 | ○ | ○ | - | Δ |
| Example 7 | A-2 | 45 | B-3 | 5 | 91.4 | 0.2 | 15.1 | - | 3.4 | 1250 | 110 | 32 | ○ | ○ | - | ○ |
| Example 8 | A-2 | 45 | B-5 | 5 | 91.7 | 0.3 | 5.7 | - | 1.8 | 970 | 80 | 24 | ○ | ○ | - | - |
| Example 9 | A-2 | 45 | B-6 | 5 | 92.3 | 0.1 | 2.6 | - | 1.5 | 1260 | 100 | 33 | ○ | ○ | - | - |
| Comparative Example 1 | A-2 | 50 | - | - | 92.6 | 0.0 | 0.6 | - | 0.8 | 1400 | 80 | 35 | - | x | - | x |

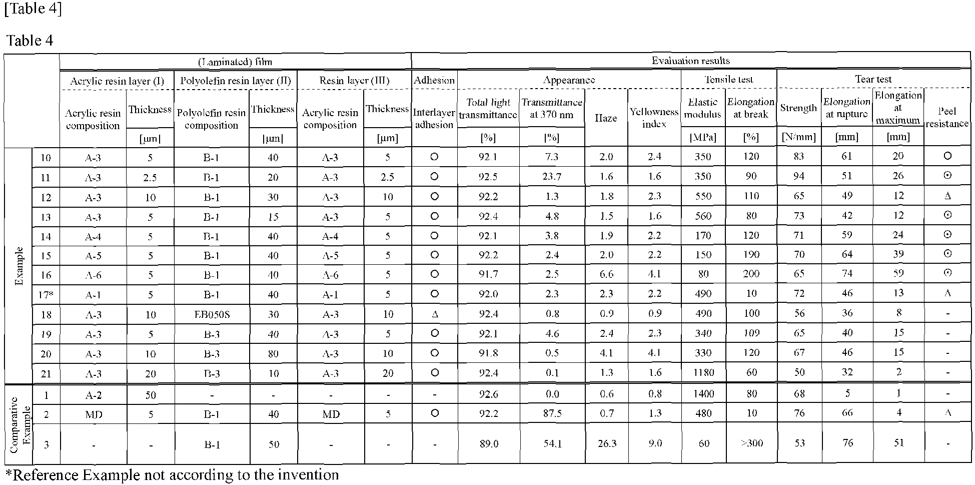

### [Table 5]

**Table 5**

| | Subject of measurement | Evaluation results | | | |
|---|---|---|---|---|---|
| | | Yellowness index | | Adhesion | |
| | | Before test | After test | Before test | After test |
| Example 1 | laminate with PET substrate | 2.3 | 2.4 | ○ | ○ |
| Example 1 | laminate with EVA substrate | 1.5 | 1.8 | ○ | ○ |
| Comparative Example 4 | single PET substrate | 0.9 | 67.9 | - | - |

### [Table 6]

**Table 6**

| | Subject of measurement | Elongation at break [%] | | |
|---|---|---|---|---|
| | | 0h | 24h | 48h |
| Example 1 | laminate with PET substrate | 75 | 32 | 32 |
| Example 12 | laminated film | 110 | 76 | 14 |
| Comparative Example 3 | single resin layer (II) | >300 | 3 | 1 |
| Comparative Example 4 | single PET substrate | 114 | 1 | 1 |

Examples and Production Examples above revealed the following things. The laminated films obtained in Examples 1 to 21 underwent no interlayer peeling at 10 or more squares in the evaluation of interlayer adhesion, and thus were superior in interlayer adhesion.

Each of the laminated film obtained in Examples 1 to 9 exhibited good adhesion to substrates including PET. The laminated film in Example 1 had low internal haze, and thus good optical properties. Moreover, the laminate of a laminated film and a substrate obtained in Example 1 was superior in any of weatherability against coloring, weatherability for adhesion, and weatherability for flexibility.

In contrast, the film obtained in Comparative Example 1 was found be poor in adhesion (bondability) to substrates (PET and PP) because of the lack of the polyolefin resin layer (II).

The laminated films obtained in Examples 10 to 16, Reference Example 17 and Examples 18 to 21 had high total light transmittance and low haze, and thus good optical properties. Moreover, the elongation at rupture and elongation at maximum were high in the tear test, and thus the tear properties were also good.

In contrast, the film obtained in Comparative Example 1 was found to exhibit low elongation at rupture and low elongation at maximum in the tear test and thus tear properties were poor, because of the lack of the polyolefin resin layer. The laminated film obtained in Comparative Example 2 was found to exhibit high transmittance at a wavelength of 370 nm and thus be poor in weatherability as compared with films in Examples, because of the lack of the specific acrylic resin layer. Further, the film obtained in Comparative Example 3 was poor in appearance and weatherability for flexibility because the film was composed only of the polyolefin resin layer (II).

## Claims

1. A laminated film comprising:
an acrylic resin layer (I) formed of an acrylic resin composition (A); and
a polyolefin resin layer (II) formed of a polyolefin resin composition (B), wherein
the acrylic resin composition (A) includes a rubber particle,
the polyolefin resin composition (B) has a halogen element content of less than 10% by mass,
the polyolefin resin composition (B) includes an additive (C2), and
a content of the additive (C2) in the polyolefin resin composition (B) is 0.01 parts by mass or more, based on 100 parts by mass of a polyolefin resin (B1) included in the polyolefin resin composition (B), or based on 100 parts by mass of the polyolefin resin (B1) and another polymer (B2) in total when the polyolefin resin composition (B) includes the polymer (B2),
wherein the additive (C2) includes a tackifier, and
wherein an elongation at break of the acrylic resin composition (A) is 20% or more wherein the elongation at break is measured by a method of measurement specified in the description.

2. The laminated film according to claim 1, wherein the rubber particle is an acrylic rubber particle.

3. The laminated film according to claim 1 or 2, wherein the rubber particle has core-shell structure.

4. The laminated film according to any one of claims 1 to 3, wherein the polyolefin resin composition (B) includes a modified polyolefin resin.

5. The laminated film according to any one of claims 1 to 4, wherein the tackifier is a hydrogenated product of a petroleum resin.

6. The laminated film according to any one of claims 1 to 5, wherein the laminated film has a total thickness of 10 µm or more and 500 µm or less.

7. The laminated film according to any one of claims 1 to 6, wherein the laminated film has a transmittance of less than 1.0% at a wavelength of 370 nm, wherein the transmittance at a wavelength of 370 nm is measured by a method specified in the description.

8. The laminated film according to any one of claims 1 to 7, wherein the laminated film has a total light transmittance of 90% or more, wherein the total light transmittance is measured by a method specified in the description.

9. The laminated film according to any one of claims 1 to 8, wherein the laminated film has a tensile modulus of 20 MPa or more and 3000 MPa or less, wherein the tensile modulus is measured by a method specified in the description.

10. The laminated film according to any one of claims 1 to 9, wherein a content of the additive (C2) in the polyolefin resin composition (B) is 50 parts by mass or less, based on 100 parts by mass of a polyolefin resin (B1) included in the polyolefin resin composition (B), or based on 100 parts by mass of the polyolefin resin (B1) and another polymer (B2) in total when the polyolefin resin composition (B) includes the polymer (B2).

11. A method for producing the laminated film according to any one of claims 1 to 10, wherein production is performed through a co-extrusion method.

12. A laminate comprising the laminated film according to any one of claims 1 to 10 and a resin substrate, wherein the acrylic resin layer (I), the polyolefin resin layer (II), and the resin substrate are laminated in the order presented.

13. A protective film comprising the laminated film according to any one of claims 1 to 10.

14. An overlay film comprising the laminated film according to any one of claims 1 to 10.

## Patentansprüche

1. Verbundfolie, umfassend:
eine Acrylharzschicht (I), die aus einer Acrylharzzusammensetzung (A) gebildet ist; und eine Polyolefinharzschicht (II), die aus einer Polyolefinharzzusammensetzung (B) gebildet ist, wobei
die Acrylharzzusammensetzung (A) ein Gummipartikel enthält,
die Polyolefinharzzusammensetzung (B) einen Gehalt an Halogenelementen von weniger als 10 Masse-% aufweist,
die Polyolefinharzzusammensetzung (B) ein Additiv (C2) enthält und
der Gehalt des Additivs (C2) in der Polyolefinharzzusammensetzung (B) 0,01 Masseteile oder mehr beträgt, bezogen auf 100 Masseteile eines in der Polyolefinharzzusammensetzung (B) enthaltenen Polyolefinharzes (B1) oder bezogen auf insgesamt 100 Masseteile des Polyolefinharzes (B1) und eines weiteren Polymers (B2), wenn die Polyolefinharzzusammensetzung (B) das Polymer (B2) enthält,
wobei das Additiv (C2) einen Klebrigmacher enthält, und
wobei die Bruchdehnung der Acrylharzzusammensetzung (A) 20% oder mehr beträgt, wobei die Bruchdehnung nach einem in der Beschreibung angegebenen Messverfahren gemessen wird.

2. Verbundfolie nach Anspruch 1, wobei das Gummipartikel ein Acrylgummipartikel ist.

3. Verbundfolie nach Anspruch 1 oder 2, wobei das Gummipartikel eine Kern-Schale-Struktur aufweist.

4. Verbundfolie nach einem der Ansprüche 1 bis 3, wobei die Polyolefinharzzusammensetzung (B) ein modifiziertes Polyolefinharz enthält.

5. Verbundfolie nach einem der Ansprüche 1 bis 4, wobei der Klebrigmacher ein hydriertes Produkt eines Erdölharzes ist.

6. Verbundfolie nach einem der Ansprüche 1 bis 5, wobei die Verbundfolie eine Gesamtdicke von 10 µm oder mehr und 500 µm oder weniger aufweist.

7. Verbundfolie nach einem der Ansprüche 1 bis 6, wobei die Verbundfolie eine Durchlässigkeit von weniger als 1,0% bei einer Wellenlänge von 370 nm aufweist, wobei die Durchlässigkeit bei einer Wellenlänge von 370 nm nach einem in der Beschreibung angegebenen Verfahren gemessen wird.

8. Verbundfolie nach einem der Ansprüche 1 bis 7, wobei die Verbundfolie eine Gesamtlichtdurchlässigkeit von 90% oder mehr aufweist, wobei die Gesamtlichtdurchlässigkeit nach einem in der Beschreibung angegebenen Verfahren gemessen wird.

9. Verbundfolie nach einem der Ansprüche 1 bis 8, wobei die Verbundfolie einen Zugmodul von 20 MPa oder mehr und 3000 MPa oder weniger aufweist, wobei der Zugmodul nach einem in der Beschreibung angegebenen Verfahren gemessen wird.

10. Verbundfolie nach einem der Ansprüche 1 bis 9, wobei der Gehalt des Additivs (C2) in der Polyolefinharzzusammensetzung (B) 50 Masseteile oder weniger beträgt, bezogen auf 100 Masseteile eines in der Polyolefinharzzusammensetzung (B) enthaltenen Polyolefinharzes (B1) oder bezogen auf insgesamt 100 Masseteile des Polyolefinharzes (B1) und eines weiteren Polymers (B2), wenn die Polyolefinharzzusammensetzung (B) das Polymer (B2) enthält.

11. Verfahren zur Herstellung der Verbundfolie nach einem der Ansprüche 1 bis 10, wobei die Herstellung durch ein Coextrusionsverfahren erfolgt.

12. Laminat, umfassend die Verbundfolie nach einem der Ansprüche 1 bis 10 und ein Harzsubstrat, wobei die Acrylharzschicht (I), die Polyolefinharzschicht (II) und das Harzsubstrat in der angegebenen Reihenfolge laminiert sind.

13. Schutzfolie, umfassend die Verbundfolie nach einem der Ansprüche 1 bis 10.

14. Deckfolie, umfassend die Verbundfolie nach einem der Ansprüche 1 bis 10.

## Revendications

1. Film stratifié comportant :
une couche de résine acrylique (I) formée d'une composition de résine acrylique (A) ; et
une couche de résine de polyoléfine (II) formée d'une composition de résine de polyoléfine (B), dans lequel
la composition de résine acrylique (A) inclut une particule de caoutchouc,
la composition de résine de polyoléfine (B) a une teneur en élément halogène inférieure à 10 % en masse,
la composition de résine de polyoléfine (B) inclut un additif (C2), et
une teneur en additif (C2) dans la composition de résine de polyoléfine (B) est de 0,01 partie en masse ou plus, sur la base de 100 parties en masse d'une résine de polyoléfine (B1) incluse dans la composition de résine de polyoléfine (B), ou sur la base de 100 parties en masse de la résine de polyoléfine (B1) et d'un autre polymère (B2) au total lorsque la composition de résine de polyoléfine (B) inclut le polymère (B2),
dans lequel l'additif (C2) inclut un agent donnant du collant, et
dans lequel un allongement à la rupture de la composition de résine acrylique (A) est de 20 % ou plus, dans lequel l'allongement à la rupture est mesuré par un procédé de mesure spécifié dans la description.

2. Film stratifié selon la revendication 1, dans lequel la particule de caoutchouc est une particule de caoutchouc acrylique.

3. Film stratifié selon la revendication 1 ou 2, dans lequel les particules de caoutchouc ont une structure à noyau-enveloppe.

4. Film stratifié selon l'une quelconque des revendications 1 à 3, dans lequel la composition de résine de polyoléfine (B) inclut une résine de polyoléfine modifiée.

5. Film stratifié selon l'une quelconque des revendications 1 à 4, dans lequel l'agent donnant du collant est un produit hydrogéné d'une résine de pétrole.

6. Film stratifié selon l'une quelconque des revendications 1 à 5, dans lequel le film stratifié présente une épaisseur totale de 10 µm ou plus et de 500 µm ou moins.

7. Film stratifié selon l'une quelconque des revendications 1 à 6, dans lequel le film stratifié présente un facteur de transmission inférieur à 1,0 % à une longueur d'onde de 370 nm, dans lequel le facteur de transmission à une longueur d'onde de 370 nm est mesuré par un procédé spécifié dans la description.

8. Film stratifié selon l'une quelconque des revendications 1 à 7, dans lequel le film stratifié présente un facteur de transmission du flux lumineux total de 90 % ou plus, dans lequel le facteur de transmission du flux lumineux total est mesuré par un procédé spécifié dans la description.

9. Film stratifié selon l'une quelconque des revendications 1 à 8, dans lequel le film stratifié a un module d'élasticité en traction de 20 MPa ou plus et de 3 000 MPa ou moins, dans lequel le module d'élasticité en traction est mesuré par un procédé spécifié dans la description.

10. Film stratifié selon l'une quelconque des revendications 1 à 9, dans lequel une teneur en additif (C2) dans la composition de résine de polyoléfine (B) est de 50 parties en masse ou moins, sur la base de 100 parties en masse d'une résine de polyoléfine (B1) incluse dans la composition de résine de polyoléfine (B), ou sur la base de 100 parties en masse de la résine de polyoléfine (B1) et d'un autre polymère (B2) au total lorsque la composition de résine de polyoléfine (B) inclut le polymère (B2).

11. Procédé pour produire le film stratifié selon l'une quelconque des revendications 1 à 10, dans lequel la production est réalisée par un procédé de coextrusion.

12. Stratifié comportant le film stratifié selon l'une quelconque des revendications 1 à 10 et un substrat en résine, dans lequel la couche de résine acrylique (I), la couche de résine de polyoléfine (II) et le substrat en résine sont stratifiés dans l'ordre présenté.

13. Film protecteur comportant le film stratifié selon l'une quelconque des revendications 1 à 10.

14. Film de recouvrement comportant le film stratifié selon l'une quelconque des revendications 1 à 10.
